# EUROPEAN PATENT SPECIFICATION

(11) **EP 0 344 135 B1**
(45) Date of publication and mention of the grant of the patent: **20.01.1993**
(21) Application number: 89850137.4
(22) Date of filing: 27.04.1989
(51) Int. Cl.: B60J 3/02

(54) **Sun visor and lighting installation for motor vehicles**
Sonnenblende und Beleuchtungseinrichtung für Kraftfahrzeuge
Pare-soleil et installation d'éclairage pour des véhicules automobiles

(30) Priority: 29.04.1988 SE 8801631
(43) Date of publication of application: 29.11.1989
(73) Proprietor: Happich S.a.r.l., F-57150 Creutzwald (FR)
(72) Inventor: Svensson, E. Gunnar, S-782 00 Malung (SE)
(74) Representative: Kierkegaard, Lars-Olov

(56) References cited:
- DE-A- 3 711 570
- DE-A- 3 814 315

## Description

The present invention relates to a sun visor and lighting installation for motor vehicles, comprising a) an oblong plate, said plate having spaced apart bearing means at one of its longitudinal sides which, in one position of the plate, cooperate with bearing means fixed relative to the vehicle and b) a lighting unit disposed, when the plate is folded down to an essentially vertical position, to spread light at least in a direction away from the plate.

Sun visor and lighting installations of this type have up to now been designed with the lighting unit in combination with a mirror directly mounted on the sun visor itself and the lighting has the purpose of directing light towards the person looking in the mirror of the sun visor. In some cases, the mirror and lighting unit are co-ordinated with a cover in such a way that the lighting unit in a certain position of the sun visor and with the cover as a shade can be used for map reading for example. In its normal position with the sun visor folded up towards the ceiling, the lighting on the sun visor has, however, no purpose to fulfill, rather, other lighting means are used for the other illumination purposes, such as a lighting unit placed centrally on the ceiling, special reading lamps etcetera.

The purpose of the present invention is to provide a sun visor and lighting installation of the type described in the introduction, in which the lighting unit can be used both to illuminate a person looking in the mirror mounted on the sun visor when the sun visor is folded down in the vertical position and for other lighting purposes, for example as a general illumination to replace ordinary ceiling lights, when the sun visor is folded up against the ceiling.

This is achieved according to the invention by virtue of the fact that the lighting unit has an elongated housing fixed relative to the vehicle and that the plate, in said one position, is swingable relative to the lighting unit about a longitudinal axis of the lighting unit.

In such an arrangement, the components can be arranged so that the lighting unit, when the visor is folded up in its normal position towards the ceiling, will be immediately in front of an edge of the sun visor and this will at most block directly rearwardly directed light, but will permit normal spreading of light obliquely backwards and downwards. When the sun visor is folded down into its vertical position, the lighting unit will be above the upper edge of the sun visor and provide directly backwardly directed light in the same manner as a lighting unit mounted on the sun visor.

Further developments in line with Claim 1 are referred to in the dependent claims.

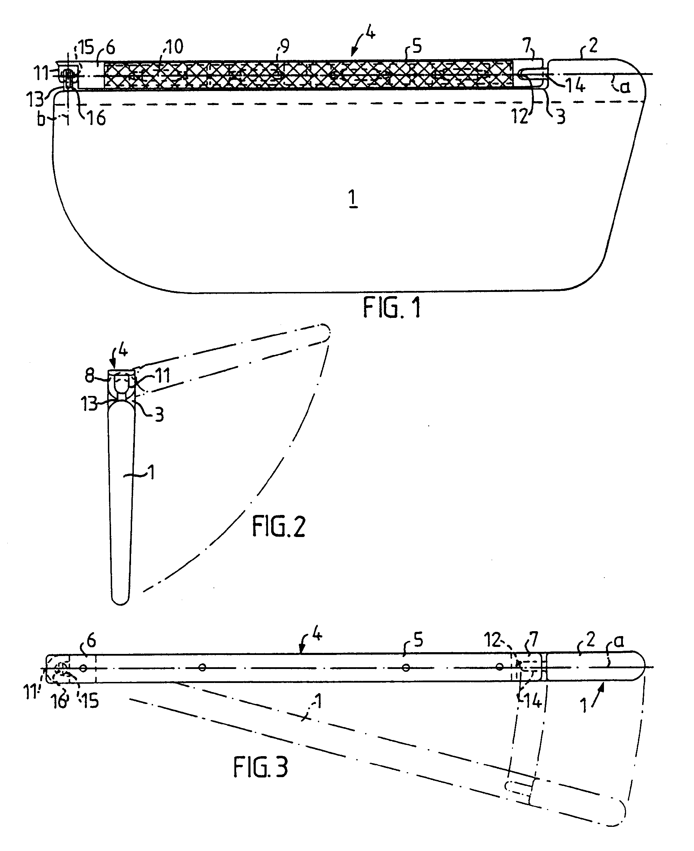

The invention will be described in more detail with reference to examples shown in the accompanying drawings, where Figures 1, 2 and 3 show a plan view, a side view and a view from above respectively of a sun visor with associated lighting unit.

The sun visor itself consists in principle of an oblong plate 1, which can be moulded formed plastic body with an embedded reinforcing metal wire frame (not shown). The plate 1 has on one longitudinal side 2 a cavity or depression 3, the shape and size of which are adapted to a wand-shaped lighting unit generally designed 4. The unit 4 fills the cavity 3 and gives the impression of forming a portion of the sun visor, as is evident from Figure 1.

The lighting unit 4 has a flat bottom plate 5, intended to be screwed securely to the ceiling of the vehicle at the top of the windshield, a pair of U-shaped end pieces 6,7 and an intermediate "lamp glass" in form of a U-profile 8, for example of transparent plastic material. Lamp holders 9 for tube lamps 10 are fixed to the bottom plate 5 inside the U-profile 8. In the example shown, four tube lamps are used. Alternatively, a fluorescent tube can be used. The U-profile 8 can be completely transparent to spread light uniformly downwards and to the sides or it can have certain portions opaque, or reflectors can be arranged on its inside to provide more concentrated light in a certain direction.

Each end piece 6, 7 of the lighting unit 4 is made with a bearing 11, 12 for individual shafts 13, 14 respectively, which are solidly journalled to the plate 1. The bearing 11 forms a slotted ball socket for a ball portion 15 on the shaft 13. A slot 16 through the ball 15 and the shaft 13 make it possible to snap the shaft 13 into its bearing 11. The other bearing 12 consists of a horizontal slot into which there extends the shaft 14 which is directed in the longitudinal direction of the wand-shaped lighting unit. The bearing and shaft arrangement described permits rotation of the sun visor both around the longitudinal axis of the lighting unit "a" and about a vertical axis "b" through the bearing 11. The latter rotation requires that the bearing 14 be opened on one side, so that the shaft 14 can be swung out from the bearing 12, as shown in Figure 3.

In the embodiment shown in the Figures, the thickness of the lighting unit 4 is essentially equal to the thickness of the plate 1 at its upper edge and its length is equal to the length of the cavity 3. The gap between the lighting unit 4 and the horizontal edge of the cavity 3 can be kept very small due to the U-profile of the lighting unit, which means that the lighting unit gives the impression of forming a portion of the sun visor itself, providing an aesthetically pleasing entity.

The lighting unit 4 can be electrically connected with advantage via common door switches which complete the circuit so that the lighting unit is lit when the doors are opened. Manually activated switches are of course also necessary so that the lighting unit can be turned on and off independently of the door switches.

It is of course possible within the scope of the invention to separate the bearings 11 and 12 from the lighting unit 4 and fix these as separate units in the ceiling of the vehicle, but a number of the advantages of the invention will then be lost due to the fact that several separate parts must then be fitted to each other during the actual mounting in the vehicle.

## Claims

1. Sunvisor and lighting installation for motor vehicles comprising a) an oblong plate, said plate having spaced apart bearing means (13,14) at one of its longitudinal sides which, in one position of the plate, co-operate with means (11,12) fixed relative to the vehicle and a lighting unit (4) disposed, when the plate (1) is folded down to an essentially vertical position, to spread light at least in a direction away from the plate, **characterized** in that the lighting unit (4) has an elongated housing (5-8) fixed relative to the vehicle and that the plate (1), in said one position,is swingable relative to the lighting unit about a longitudinal (a) axis of the lighting unit.

2. Installation according to claim 1, **characterized** in that the ligthing unit (4) extends along the greater portion of the length of the plate (1).

3. Installation according to claims 1 or 2, **characterized** in that the plate (1) has a cavity (3) adapted to the shape of the lighting unit (4) in its side (2) facing the lighting unit.

4. Installation according to one of claims 1-3, **characterized** in that the lighting unit (4) has a housing (5-8) with bearing means (11,12) at both ends cooperating with the plate bearing means (13,14).

5. Installation according to claim 4, **characterized** in that the thickness of the housing of the lighting unit (4) is essentially equal to the thickness of the plate (1) at the edge facing the lighting unit.

6. Installation according to claim 5, **characterized** in that the lighting unit (4) has a U-profile and a flat mounting plate (5) designed to be fixed to the ceiling of the vehicle above the upper edge of the windshield.

## Patentansprüche

1. Sonnenblende und Beleuchtungseinrichtung für Kraftfahrzeuge mit
a) einer länglichen Platte, wobei diese Platte im Abstand angeordnete Lagermittel (13,14) an einer ihrer Längsseiten aufweist, die in einer bestimmten Position der Platte mit bezüglich des Fahrzeugs feststehenden Lagermitteln (11,12) zusammenwirken, und mit
b) einer Beleuchtungseinheit, die bei in eine im wesentlichen vertikale Position heruntergeklappter Platte (1) Licht zumindest in von der Platte wegweisender Richtung abgibt, **dadurch gekennzeichnet,** daß die Beleuchtungseinheit (4) ein längliches, bezüglich des Fahrzeugs feststehendes Gehäuse (5-8) aufweist, und daß die Platte (1) in der genannten Position um eine Längsachse (a) der Beleuchtungseinheit bezüglich der Beleuchtungseinheit schwenkbar ist.

2. Einrichtung nach Anspruch 1, **dadurch gekennzeichnet**, daß die Beleuchtungseinheit (4) sich entlang dem größeren Teil der Längsausdehnung der Platte (1) erstreckt.

3. Einrichtung nach Anspruch 1 oder 2, **dadurch gekennzeichnet**, daß die Platte (1) in ihrer der Beleuchtungseinheit zugewandten Seite (2) eine an die Form der Beleuchtungseinheit (4) angepaßte Vertiefung aufweist.

4. Einrichtung nach Anspruch 1-3, **dadurch gekennzeichnet**, daß die Beleuchtungseinheit (4) ein Gehäuse (5-8) mit an beiden Enden angeordneten Lagermitteln (11,12), die mit den Plattenlagermitteln (13,14) zusammenwirken, aufweist.

5. Einrichtung nach Anspruch 4, **dadurch gekennzeichnet,** daß die Dicke des Gehäuses der Beleuchtungseinheit (4) im wesentlichen der Dicke der Platte (1) an dem der Beleuchtungseinheit zugewandten Rand entspricht.

6. Einrichtung nach Anspruch 5, **dadurch gekennzeichnet,** daß die Beleuchtungseinheit (4) ein U-förmiges Profil sowie eine flache Befestigungsplatte (5) zur Befestigung an der Fahrzeugdecke oberhalb der Oberkante der Windschutzscheibe aufweist

## Revendications

1. Installation de pare-soleil et d'éclairage pour véhicules à moteur comportant:
a) une plaque allongée, ladite plaque comportant en un de ses côté longitudinaux des moyens de support (13, 14) espacés les uns des autres, qui, pour une position de la plaque, coopèrent avec des moyens de support (11, 12) fixés par rapport au véhicule,
b) un dispositif d'éclairage (4) conçu pour, quand la plaque (1) est rabattue vers le bas dans une position sensiblement verticale, émettre une lumière dans au moins une direction loin de la plaque,
caractérisée en ce que le dispositif d'éclairage (4) comporte un boîtier (5-8) allongé fixé par rapport au véhicule, et en ce que la plaque (1), dans ladite position, peut basculer par rapport au dispositif d'éclairage autour d'un axe longitudinal (a) du dispositif d'éclairage.

2. Installation selon la revendication 1, caractérisée en ce que le dispositif d'éclairage (4) s'étend le long de la plus grande partie de la longueur de la plaque (1).

3. Installation selon la revendication 1 ou 2, caractérisée en ce que la plaque (1) présente un creux (3) adapté à la forme du dispositif d'éclairage (4) sur son côté (2) situé en vis-à-vis du dispositif d'éclairage.

4. Installation selon l'une quelconque des revendications 1 à 3, caractérisée en ce que le dispositif d'éclairage (4) comporte un boîtier (5-8) avec des moyens de support (11-12) en ses deux extrémités qui coopèrent avec les moyens de support (13, 14) de la plaque.

5. Installation selon la revendication 4, caractérisée en ce que l'épaisseur du boîtier du dispositif d'éclairage (4) est sensiblement égale à l'épaisseur de la plaque (1) au niveau du bord situé en vis-à-vis du dispositif d'éclairage.

6. Installation selon la revendication 5, caractérisée en ce que le dispositif d'éclairage (4) a un profil en U et une plaque (5) de montage plate conçue pour être fixée au plafond du véhicule au-dessus du bord supérieur du pare-brise.
